# EUROPEAN PATENT APPLICATION

(11) **EP 1 750 200 A2**
(43) Date of publication of application: **07.02.2007**
(21) Application number: 06254017.4
(22) Date of filing: 31.07.2006
(51) Int. Cl.: G06F 9/50

(54) **System and method for executing job step, and computer product**

(30) Priority: 01.08.2005 JP 2005223314
(71) Applicant: Fujitsu Ltd., Kawasaki-shi, Kanagawa 211-8588 (JP)
(72) Inventor: Uemura, Sachiyo, Kawasaki-shi Kanagawa 211-8588 (JP); Watanabe, Kazuyoshi, Kawasaki-shi Kanagawa 211-8588 (JP)
(74) Representative: Stebbing, Timothy Charles

(57) **Abstract**

A batch processing system includes a plurality of executing servers (20, 30,...) and a scheduling server (10). The scheduling server causes the executing servers to perform distributed execution of a batch job. The scheduling server selects (S11) one executing server to execute the first job step in the batch job. The selected executing server executes the first job step and selects itself or another executing server (S12) to execute the next non-executed job step. This process is repeated until the last job step is executed.

## Description

The present invention relates to a technology for executing a job step by distributing job steps among a plurality of servers in a batch processing system. More particularly, the present invention relates to preventing concentration of load on a specific computer and enabling efficient utilization of computer resources.

In a batch processing method, a batch, which is a fixed amount of data or data pertaining to a fixed period of time, is collected and subjected to processing in a lump. Although conventionally batch processing is carried out with the aid of a mainframe computer, recently a so-called open server (open system server, such as Fujitsu's PRIMEQUEST server line using Linux/Windows, or PRIMEPOWER running Solaris) is used to carry out batch processing.

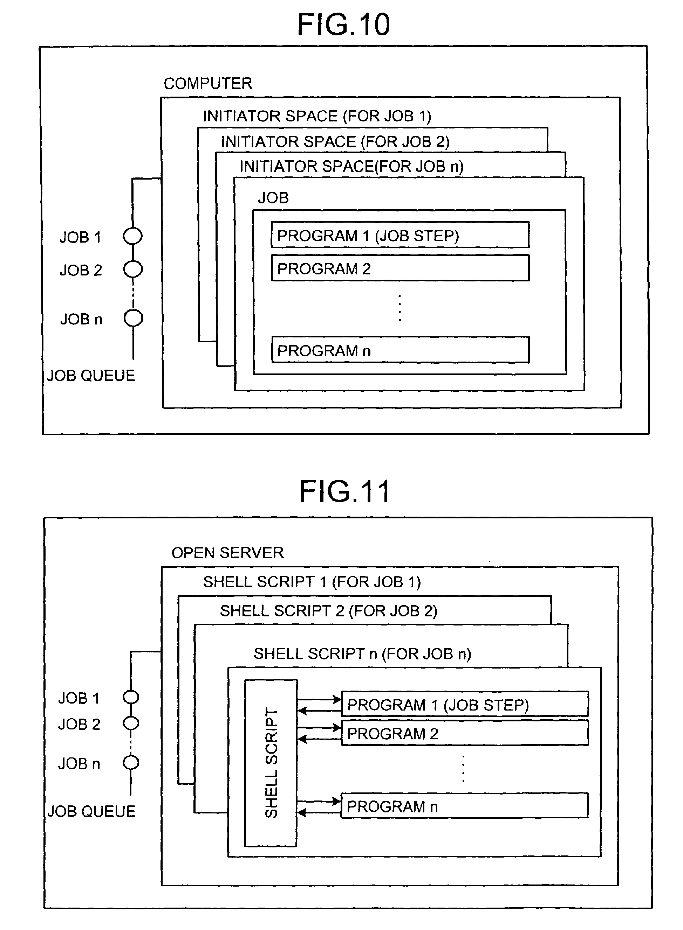

Fig. 10 is a schematic to explain how the mainframe computer performs batch processing. The mainframe computer generates an initiator space for every job (batch job) on a computer, and executes the job by sequentially executing job steps in the initiator space.

Fig. 11 is a schematic to explain how the open server performs batch processing. As shown in Fig. 11, when using the open server, a shell script that sequentially calls programs executed in each job step needs to be created for every job. However, creating shell scripts equal to the number of the jobs results in a huge amount of resources and increased load on the server.

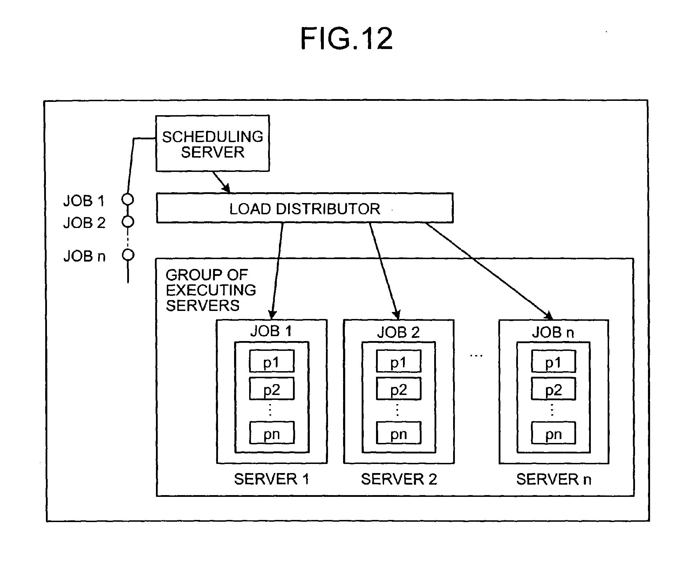

To solve this problem, the open server distributes the jobs over a plurality of networked servers. Fig. 12 is a schematic for explaining how the open server distributes the jobs. Precisely, a scheduling server allocates an executing server for every job to carry out distributed execution of the jobs.

However, a precise load distribution of a job cannot be carried out during distributed execution of the jobs, thereby resulting in variations of load on the executing servers and preventing efficient utilization of the computer resources.

A method for distributed execution of job steps is disclosed in Japanese Patent Laid-Open Publication No. 2001-166956. In this method, an executing process is allocated to the executing servers in job step units instead of job units to ensure even distribution of processing load among the executing servers.

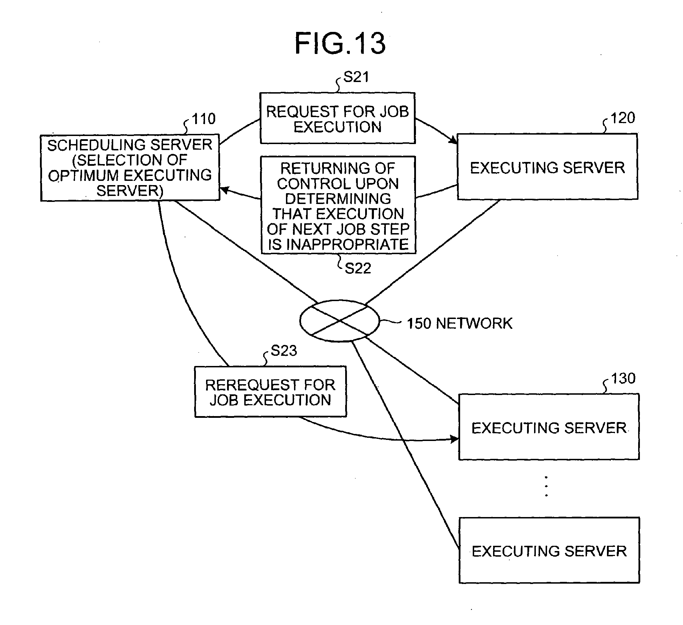

Fig. 13 is a schematic for explaining a concept of a conventional batch processing. In this method, jobs are scheduled by means of a scheduling server 110 that selects, based on load data pertaining to each executing server, an optimum executing server for requesting execution of a job. If an executing server 120 is selected, for example, the scheduling server 110 makes a job execution request to the executing server 120 (see S21).

The executing server 120, upon executing the job step, determines whether execution of the next job step is appropriate based on load status, and if execution of the next job step is not appropriate, returns control to the scheduling server 110 (see S22). The scheduling server 110, based on load data pertaining to each executing server, once again selects the optimum executing server. If an executing server 130 is selected, for example, as the optimum executing server, the scheduling server 110 again makes a job execution request to the selected executing server 130 (see S23).

Thus, in batch processing by means of the conventional method for distributed execution of job steps, processes (S21) through (S23) are repeated. In other words, the scheduling server 110 makes a job execution request to the selected optimum executing server, the executing server returns control to the scheduling server 110, and the process is repeated until all the job steps are executed. As a result, each executing server can carry out distributed execution of jobs in job step units, and process load can be evenly distributed among the executing servers.

However, in the conventional method, every time an executing server returns control to the scheduling server 110 upon determining that execution of the next job step by other executing servers is appropriate, an optimum executing server selecting process is carried out exclusively by the scheduling server 110, thus resulting in a concentration of load on the scheduling server 110 and preventing efficient utilization of the computer resources in the entire system.

The present invention has been made in view of the above problem in the conventional technology.

According to an aspect of the present invention, a batch processing system includes a plurality of servers acting as executing servers and a scheduling server, and in which the scheduling server causes the executing servers to perform distributed execution of a batch job, the batch job including a plurality of job steps arranged in sequence from a first job step to a last job step. The scheduling server includes a selecting unit that selects one executing server out of the executing servers to execute the first job step; and a first information sending unit that sends job execution data indicative of a sequence of the job steps and an execution status of each job step to selected executing server. The executing server includes a receiving unit that receives job execution data from any one of the scheduling server and another executing server; an executing unit that executes one non-executed job step in the sequence of job steps specified in received job execution data and updates an execution status of executed job step in the received job execution data; and a second information sending unit that selects, when the job step executed in the executing unit is not the last job step, an executing server out of the executing servers to execute a next non-executed job step in the sequence of job steps specified in updated job execution data, and sends the updated job execution data to selected executing server. The executing server selected to execute the next non-executed job step may be the same executing server. Each of the executing servers may be configured to act as the scheduling server so that no dedicated scheduling server is required.

According to another aspect of the present invention, a method of performing distributed execution of a batch job on a system that includes a plurality of executing servers and a scheduling server, and in which the scheduling server causes the executing servers to perform distributed execution of a batch job, the batch job including a plurality of job steps arranged in sequence from a first job step to a last job step. In this method, the scheduling server performs selecting one executing server out of the executing servers to execute the first job step; and sending data relating to the batch job to selected executing server. The executing server performs receiving data from any one of the scheduling server and another executing server; executing one non-executed job step in the batch job based on received data and updating execution status of executed job step in the received data; and selecting, when the job step executed at the executing is not the last job step, an executing server out of the executing servers to execute a next non-executed job step in the batch job based on updated data, and sending the updated data to selected executing server.

According to still another aspect of the present invention, a computer-readable recording medium stores therein a computer program that implements a method according to the present invention on a computer.

The above and other features, advantages and technical and industrial significance of this invention will be better understood by reading the following detailed description of presently preferred embodiments of the invention, when considered in connection with the accompanying drawings, in which:
Fig. 1 is a schematic for explaining a concept of batch processing by means of a method for distributed execution of job steps according to an embodiment of the present invention;
Fig. 2 is a functional block diagram of a structure of a batch processing system shown in Fig. 1;
Fig. 3 is a drawing of an example of load data;
Fig. 4 is a drawing of an example of a load defining policy;
Fig. 5 is a drawing of an example of job execution data;
Fig. 6 is a flow chart of a sequence of a process of a scheduling program according to the embodiment;
Fig. 7 is a flow chart of a sequence of a process of a job step executing program according to the embodiment;
Fig. 8 is a flow chart of a sequence of an optimum executing server selecting process by means of an optimum executing server selecting unit of the job step executing program;
Fig. 9 is a functional block diagram of a hardware structure of an executing server that executes the job step executing program according to the embodiment;
Fig. 10 is a drawing of batch processing by means of a mainframe computer;
Fig. 11 is a drawing of batch processing by means of an open server;
Fig. 12 is a drawing of a method for distributed execution of a job by means of the open server; and
Fig. 13 is a drawing of a concept of batch processing by means of a conventional method for distributed execution of job steps.

Exemplary embodiments of the present invention are explained next with reference to the accompanying drawings.

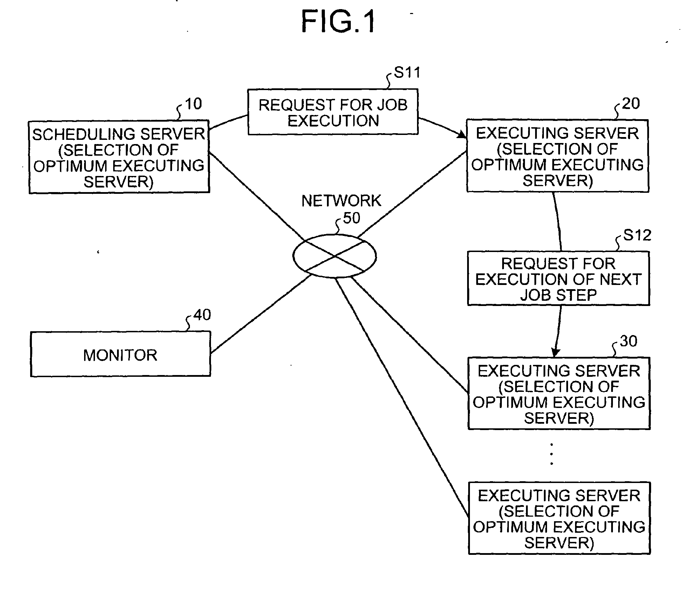

A concept of batch processing by means of a method for distributed execution of job steps (hereinafter, "distributed execution method") according to an embodiment of the present invention is explained first. Fig. 1 is a schematic for explaining the concept of the distributed execution method according to the embodiment. In the distributed execution method, a scheduling server 10 selects an optimum executing server for execution of a job. Assuming that the scheduling server 10 selects an executing server 20, the scheduling server 10 then requests the executing server 20 to execute the job (see S11).

The executing server 20 executes a job step of the job and selects an optimum executing server for execution of the next job step. Assuming the executing server 20 selects an executing server 30, the executing server 20 requests the optimum executing server 30 to execute the next job step of the job (see S12). The process similar to S12 is repeated until there are no more job steps left. Upon execution of all the job steps, the scheduling server 10 is notified of execution of the job.

Thus, each executing server executes one job step in the job, selects an optimum executing server for execution of the next job step, and directly requests the selected executing server to execute the job. Thus, the process carried out by the scheduling server 10 only includes selection of an executing server for execution of the first job step in each job, issue of a job execution request to the selected executing server, and receipt of notification pertaining to completion of execution of the job. Other processes such as selection of an optimum executing server, issue of a job execution request to the optimum executing server, and execution of the job steps are carried out among the executing servers without the scheduling server 10. Thus, load on the scheduling server 10 such as process load due to selection of an optimum executing server can be distributed among the executing servers, and concentration of load on the scheduling server 10 can be prevented.

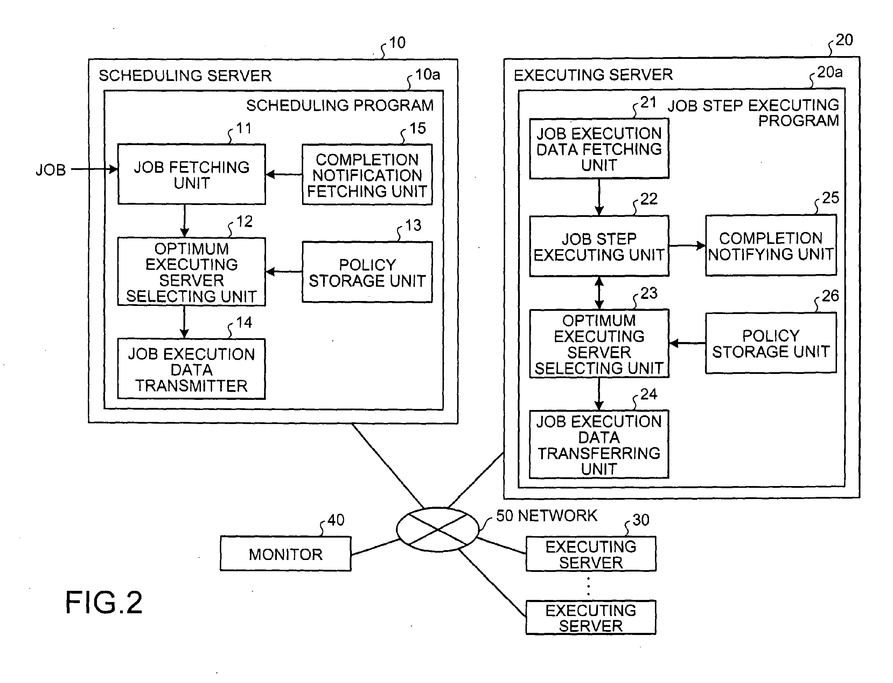

Fig. 2 is a functional block diagram of the structure of the batch processing system according to the present embodiment. The batch processing system fetches a job from a job queue. The batch processing system includes the scheduling server 10 which requests an executing server to execute a job, an arbitrary number of executing servers 20, 30, and so on that execute job steps included in each job, and a monitor 40 that monitors load status of the executing servers. The scheduling server 10, the executing servers 20, 30, and so on, and the monitor 40 are connected via a network 50.

The scheduling server 10 is a computer, which executes a scheduling program 10a that allocates execution of a job fetched from the job queue to each of the executing servers. The scheduling program 10a includes a job fetching unit 11, an optimum executing server selecting unit 12, a policy storage unit 13, a job execution data transmitter 14, and a completion notification fetching unit 15.

The job fetching unit 11 sequentially fetches a job from the job queue. The optimum executing server selecting unit 12 selects an optimum executing server for requesting execution of the job fetched by the job fetching unit 11 based on a load defining policy that is stored in the policy storage unit 13 and load data pertaining to each of the executing servers.

The policy storage unit 13 stores the load defining policy that is used during selection of the executing server. The user defines the load defining policy. The "load defining policy" is defined based on load data of the executing servers.

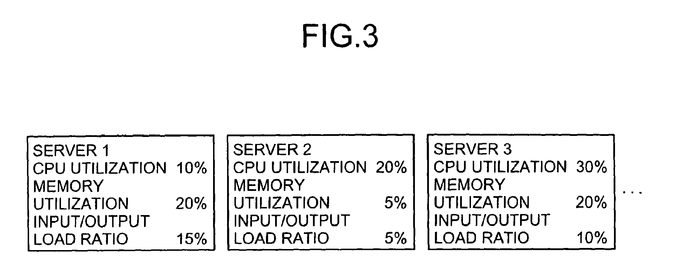

Fig. 3 is a drawing of an example of load data. As shown in Fig. 3, Central Processing Unit (CPU) utilization, memory utilization, and an Input Output (IO) load ratio are used as load data. For example, "10 percent" of CPU utilization, "20 percent" of memory utilization, and "15 percent" of IO load ratio are used as load data pertaining to "Server 1".

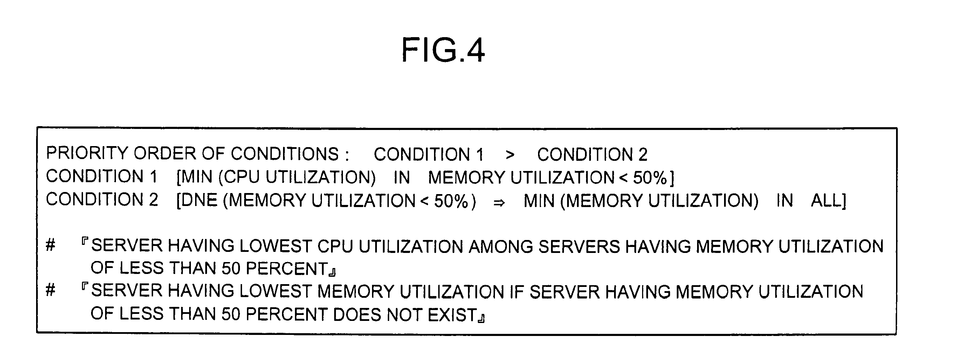

Fig. 4 is a drawing of an example of the load defining policy. According to the load defining policy shown in Fig. 4, an executing server having the lowest CPU utilization among the executing servers having memory utilization of less than 50 percent is defined as the optimum executing server (condition 1). If an executing server having memory utilization of less than 50 percent does not exist, an executing server having the lowest memory utilization is defined as the optimum executing server (condition 2).

The job execution data transmitter 14 generates job execution data that indicates execution status of the job based on data pertaining to the job that is fetched by the job fetching unit 11, and transmits the generated job execution data along with a job execution request to the executing server selected by the optimum executing server selecting unit 12. Job execution data is explained in detail later.

The completion notification fetching unit 15, upon completion of execution of all the job steps pertaining to the requested job, receives a job completion notification transmitted by the executing server that executes the last job step.

The executing servers 20, 30, and so on are computers which execute job step executing programs that execute each job step based on job execution data received from the scheduling server 10. Because the job step executing programs executed by each of the executing servers are similar in configuration, a job step executing program 20a executed by the executing server 20 is explained by way of an example.

The job step executing program 20a includes a job execution data fetching unit 21, a job step executing unit 22, an optimum executing server selecting unit 23, a job execution data transferring unit 24, a completion notifying unit 25, and a policy storage unit 26.

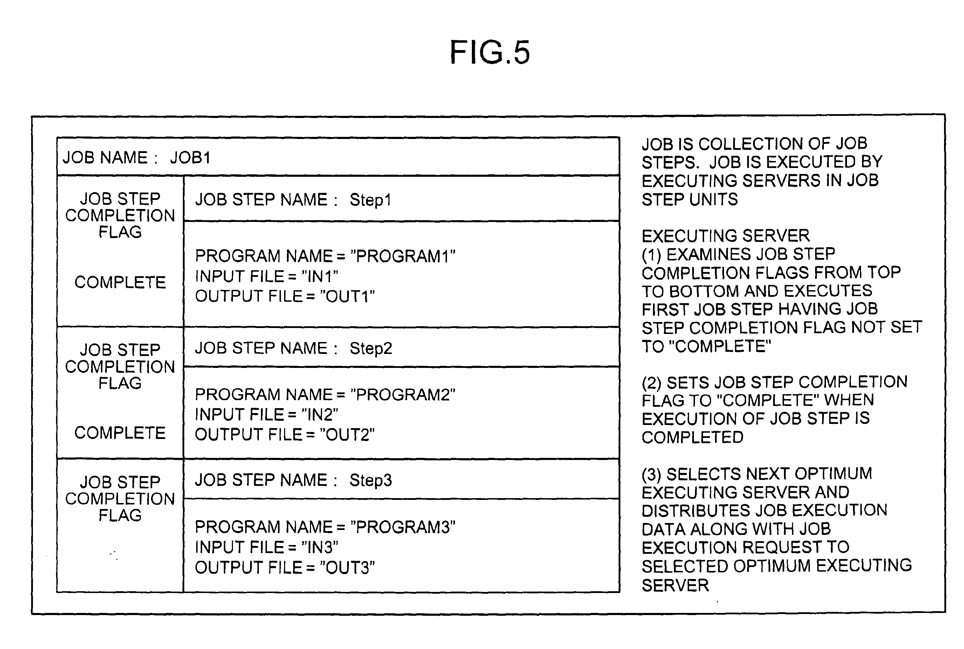

The job execution data fetching unit 21 fetches a job execution request along with job execution data from the scheduling server 10 or another executing server. Fig. 5 is a drawing of an example of job execution data. As shown in Fig. 5, the job execution data includes a job name indicating name of the job and data pertaining to the job steps that are included in the job. Data pertaining to each job step includes a job step name indicating name of the job step, a program name indicating name of the program that is executed, an input file, an output file, and a job step completion flag that indicates whether execution of the job step is complete.

For example, in "Step1", which is the first job step of a job having the job name "JOB1", "PROGRAM1" is the program name, "IN1" is the input file, "OUT1" is the output file, and the job step completion flag is set to "Complete" which indicates that execution of the job step is completed.

The job step executing unit 22 executes a job step based on the job execution data fetched by the job execution data fetching unit 21. To be specific, based on the job execution data, the job step executing unit 22 selects a job step for execution, and after executing the selected job step, sets the job step completion flag pertaining to the executed job step to "Complete". The job step executing unit 22 selects the job step for execution by sequentially searching data pertaining to the job steps from the job execution data and specifying the first job step in which the job step completion flag is not set to "Complete".

After setting the job step completion flag of the executed job step to "Complete", the job step executing unit 22 determines whether execution of the job is complete by searching for existence of a job step having the job step completion flag that is not set to "Complete".

Similarly as the optimum executing server selecting unit 12 of the scheduling server 10, the optimum executing server selecting unit 23 selects an optimum executing server for execution of a job step based on the load defining policy that is stored in the policy storage unit 26. After execution of the job step, if the job step executing unit 22 determines that execution of all the job steps is not completed, the optimum executing server selecting unit 23 selects an optimum executing server for execution of the next job step pertaining to the job.

By selecting an optimum executing server for execution of the next job step after execution of a job step, the optimum executing server selecting unit 23 enables to directly issue a job execution request among the executing servers without returning control to the scheduling server 10.

If the executing server selected by the optimum executing server selecting unit 23 is an executing server other than the executing server 20, the job execution data transferring unit 24 transfers the job execution data to the selected executing server along with the job execution request. The executing server, which receives the job execution data that is transferred by the job execution data transferring unit 24 can select the next job step for execution with the aid of the job step completion flag.

The completion notifying unit 25 transmits a job completion notification to the scheduling server 10 when execution of a job step by the job step executing unit 22 completes execution of all the job steps pertaining to the job.

The policy storage unit 26 stores the load defining policy. The load defining policy stored in the policy storage unit 26 is the same as the load defining policy that is stored in the policy storage unit 13 of the scheduling server 10. The load defining policy is distributed from the scheduling server 10 and stored in the policy storage unit 26.

The monitor 40 fetches load data from each executing server and based on a request from each executing server, transmits the load data pertaining to all the executing servers. Based on the load data fetched from the monitor 40 and the load defining policy stored in the policy storage unit 26, the optimum executing server selecting unit 23 of each executing server selects an optimum executing server for execution of the next job step.

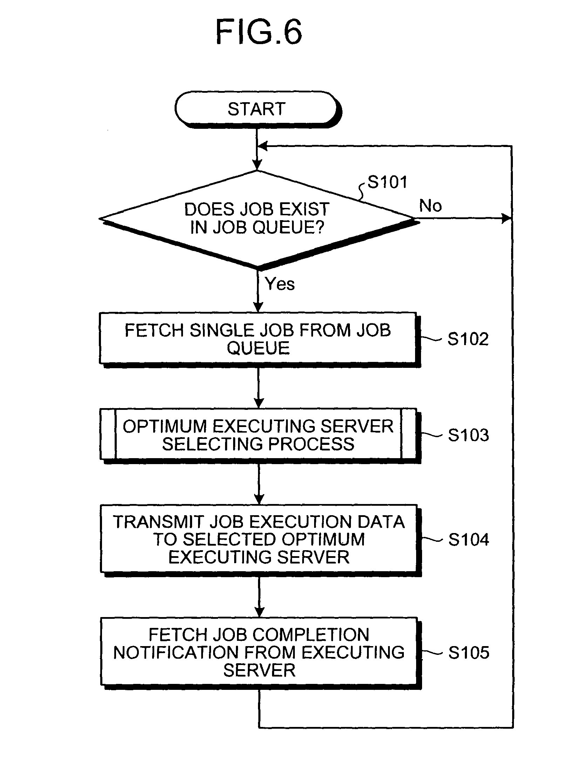

A sequence of a process of the scheduling program 10a according to the present embodiment is explained next. Fig. 6 is a flow chart of the sequence of the process of the scheduling program 10a according to the present embodiment.

As shown in Fig. 6, in the scheduling program 10a, the job fetching unit 11 determines whether a job exists in the job queue (step S101), and if a job does not exist in the job queue, waits until a job is fed to the job queue.

If a job exists in the job queue, the job fetching unit 11 fetches a single job from the job queue (step S102). Based on the load data fetched from the monitor 40 and the load defining policy stored in the policy storage unit 13, the optimum executing server selecting unit 12 carries out an optimum executing server selection process to select an executing server for requesting execution of the job (step S103). The optimum executing server selection process is explained later.

Next, the job execution data transmitter 14 adds a job step completion flag to data pertaining to the fetched job to generate job execution data, and transmits the generated job execution data along with a job execution request to the executing server selected by the optimum executing server selecting unit 12 (step S104).

The job is executed by means of transfer of the job execution data among the executing servers, the completion notification fetching unit 15 fetches a job completion notification transmitted by the executing server that executes the last job step (step S105), the process returns to step S101, and the job fetching unit 11 carries out an executing process for the next job.

The job execution data transmitter 14 generates the job execution data and transmits the generated job execution data along with a job execution request to the executing server selected by the optimum executing server selecting unit 12, thereby enabling each executing server to transfer the job execution data among the executing servers and specify the next job step for execution without returning control to the scheduling server 10 at every job step.

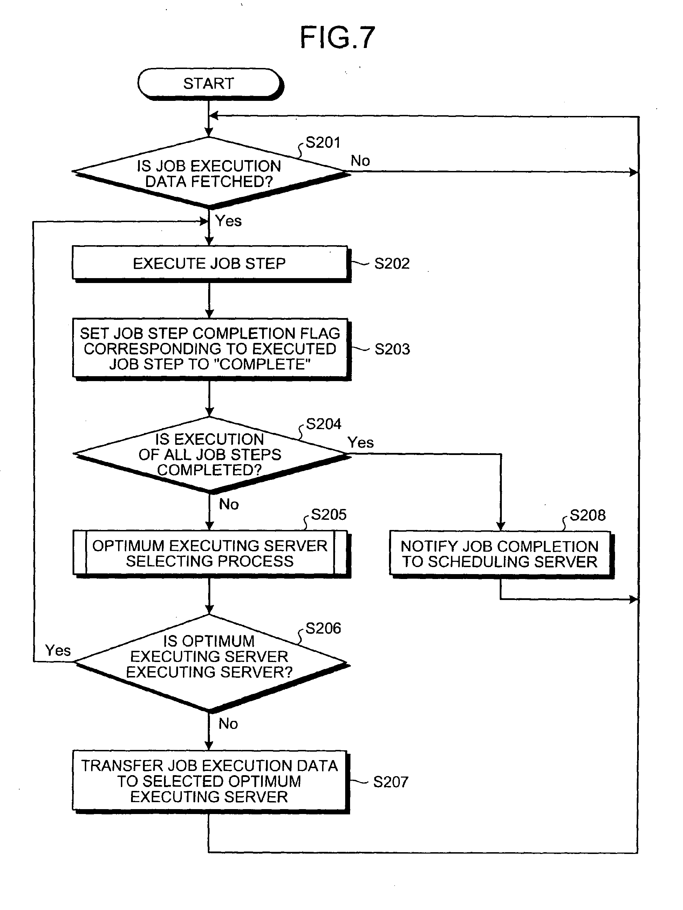

A sequence of a process of the job step executing program 20a according to the present embodiment is explained next. Fig. 7 is a flow chart of the sequence of the process of the job step executing program 20a according to the present embodiment.

As shown in Fig. 7, the job step executing program 20a determines whether the job execution data fetching unit 21 has fetched the job execution data from the scheduling server 10 or the other executing server 30 (step S201). If the job execution data fetching unit 21 has not fetched the job execution data, the job step executing program 20a waits for transmission of the job execution data.

If the job execution data fetching unit 21 has fetched the job execution data, the job step executing unit 22 executes the next job step (step S202). To be specific, the job step executing unit 22 refers to the job step completion flags from the job execution data shown in Fig. 5, and executes the first job step from the job steps in which the job step completion flag is not set to "Complete".

The job step executing unit 22 sets the job step completion flag corresponding to the executed job step to "Complete" (step S203), refers to the other job step completion flags to determine whether execution of all the job steps is completed (step S204).

If a non-executed job step exists, in other words, if a job step exists in which the job step completion flag is not set to "Complete", the optimum executing server selecting unit 23 carries out the optimum executing server selecting process (step S205).

The job execution data transferring unit 24 determines whether the executing server selected by the optimum executing server selecting unit 23 is the executing server 20 (step S206). If the executing server selected by the optimum executing server selecting unit 23 is not the executing server 20, the job execution data transferring unit 24 transfers the job execution data to the executing server selected by the optimum executing server selecting unit 23 (step S207). The job step executing program 20a returns to step S201 and waits until the job execution data fetching unit 21 fetches the job execution data.

If the executing server selected by the optimum executing server selecting unit 23 is the executing server 20, because a transfer of the job execution data is not needed, the job step executing program 20a returns to step S202 and the job step executing unit 22 executes the next job step.

If the job step executing unit 22 determines at step 204 that execution of all the job steps is completed, in other words, if the job step completion flags of all the job steps are set to "Complete", the completion notifying unit 25 notifies the scheduling server 10 that execution of all the job steps is completed (step S208). The job step executing program 20a returns to step S201 and waits until the job execution data fetching unit 21 fetches the job execution data.

Each of the executing servers carries out the optimum executing server selecting process and the job execution data is transferred among the executing servers, thereby enabling to request execution of the job among the executing servers without the scheduling server 10. Once the scheduling server 10 transmits a job execution request to an executing server, control of the job is not returned to the scheduling server 10 until execution of the job is completed, thereby enabling a reduction in process load on the scheduling server 10.

A sequence of the optimum executing server selecting process by means of the optimum executing server selecting unit 23 of the job step executing program 20a is explained next. The optimum executing server selecting unit 12 of the scheduling program 10a also executes the optimum executing server selecting process by means of a similar sequence.

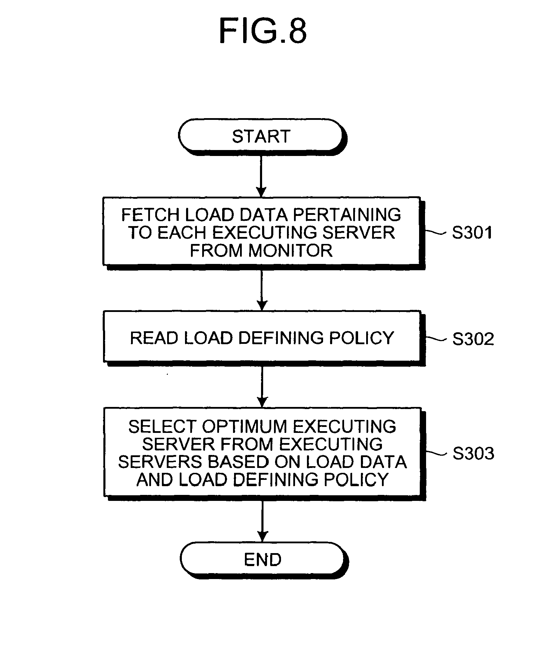

Fig. 8 is a flow chart of the sequence of the optimum executing server selecting process by means of the optimum executing server selecting unit 23 of the job step executing program 20a. As shown in Fig. 8, the optimum executing server selecting unit 23 fetches load data pertaining to each executing server from the monitor 40 (step S301).

The optimum executing server selecting unit 23 reads the load defining policy from the policy storage unit 26 (step S302) and selects the optimum executing server from the executing servers based on the load data and the load defining policy (step S303).

For example, as shown in Fig. 3, in the load data of three executing servers, if memory utilizations of "Server 1", "Server 2", and "Server 3" are "20 percent", "5 percent", and "20 percent" respectively, because the memory utilization of all the executing servers is less than 50 percent, "Condition 1" of the load defining policy is applied and the executing server having the lowest CPU utilization is selected as the optimum executing server. In the example shown in Fig. 3, because the CPU utilizations of "Server 1", "Server 2", and "Server 3" are "10 percent", "20 percent", and "30 percent" respectively, "Server 1" is selected as the optimum executing server.

Based on the load data fetched from the monitor 40 and the prior stored load defining policy, the optimum executing server selecting unit 23 selects the optimum executing server for executing the next job step, thereby enabling the executing process to be transferred to an executing server having a lower or lowest load, thus enabling effective utilization of the computer resources in the entire batch processing system.

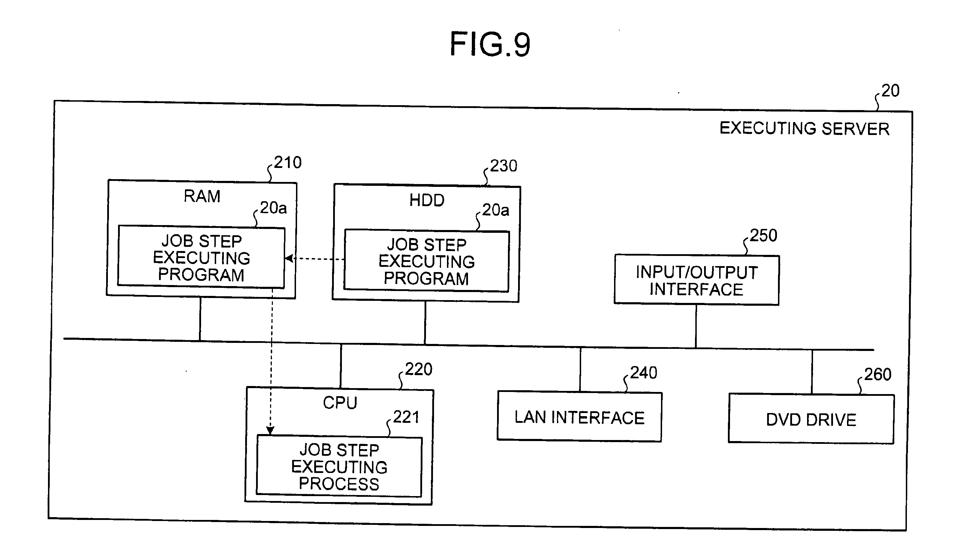

A hardware structure of the executing server 20 that executes the job step executing program 20a according to the present embodiment is explained next. Fig. 9 is a functional block diagram of the hardware structure of the executing server 20 that executes the job step executing program 20a according to the present embodiment.

As shown in Fig. 9, the executing server 20 includes a Random Access Memory (RAM) 210, a CPU 220, a Hard Disk Drive (HDD) 230, a Local Area Network (LAN) interface 240, an input/output interface 250, and a Digital Versatile Disk (DVD) drive 260.

The RAM 210 is a memory that stores a program and results during execution of the program. The program is read by the CPU 220 from the RAM 210 and executed.

The HDD 230 stores programs and data. The LAN interface 240 connects the executing server 20 to the other executing servers and the scheduling server 10 via a LAN.

The input/output interface 250 connects an input device such as a mouse, a keyboard etc. and a display device. The DVD drive 260 reads data from and writes data to a DVD.

The job step executing program 20a, which is executed by the executing server 20, is stored in a DVD, read from the DVD by the DVD drive 260, and installed in the executing server 20.

The job step executing program 20a can also be stored in a database of another computer system that is connected to the executing server 20 via the LAN interface 240, read from the database, and installed in the executing server 20.

The installed job step executing program 20a is stored in the HDD 230, read by the CPU 220 from the RAM 210 and executed as a job step executing process 221.

In the present embodiment, the job execution data fetching unit 21 of the job step executing program 20a fetches, along with a job execution request, job execution data that is generated by the job execution data transmitter 14 indicating execution status of a job. Based on the job execution data, the job step executing unit 22 executes a job step, updates the job execution data, and determines whether execution of the job is completed. If execution of the job is not completed, the optimum executing server selecting unit 23 selects the optimum executing server for execution of the next job step. If the selected executing server is not the executing server 20, the job execution data transferring unit 24 transfers the job execution data along with a job execution request to the executing server that is selected by the optimum executing server selecting unit 23. Thus, once the scheduling server 10 issues a job execution request, the job is executed only with the aid of the executing servers until execution of the job is completed without returning control to the scheduling server 10, thereby enabling to reduce the process load on the scheduling server 10.

Transfer of job execution data among the executing servers for specifying execution status pertaining to a job step and specifying the next job step for execution by an executing server that receives a job execution request is explained in the present embodiment. However, the present invention can also be similarly applied to a method for distributed execution of job steps such that an executing server, upon receiving a job execution request, determines the next job step for execution and determines whether execution of the job is completed based on an enquiry to the scheduling server 10 without transfer of job execution data among the executing servers. Although the aforementioned method results in increased load on the scheduling server 10, because the scheduling server 10 does not need to carry out the optimum executing server selecting process, load on the scheduling server 10 can be reduced as compared to the conventional method for distributed execution of job steps in which the optimum executing server selecting process is always carried out by the scheduling server 10.

Receipt of a batch job, generation of the job execution data, and selection of an executing server to execute the first job step by the scheduling server 10 is explained in the present embodiment. However, the present invention can also be applied to a method for distributed execution of job steps such that all the executing servers are provided with functions to receive the batch job and to generate the job execution data, each executing server generates the job execution data pertaining to the received batch job, selects an executing server to execute the first job step, and transmits the job execution data along with a job execution request to the selected executing server, thereby removing the necessity of the scheduling server 10.

According to the present invention, concentration of load on a specific computer such as a scheduling server etc. can be prevented, thereby enabling effective utilization of computer resources in the entire batch processing system.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A computer-readable recording medium that stores therein a computer program which when executed on a computer causes the computer to implement a method of performing distributed execution of a batch job on a system that includes a plurality of executing servers and a scheduling server, and in which the scheduling server causes the executing servers to perform distributed execution of a batch job, the batch job including a plurality of job steps arranged in sequence from a first job step to a last job step,
the computer program causing the scheduling server to execute
selecting one executing server out of the executing servers to execute the first job step; and
sending data relating to the batch job to selected executing server, and
the computer program causing the executing server to execute
receiving data from any one of the scheduling server and another executing server;
executing one non-executed job step in the batch job based on received data and updating execution status of executed job step in the received data; and
selecting, when the job step executed at the executing is not the last job step, an executing server out of the executing servers to execute a next non-executed job step in the batch job based on updated data.

2. The computer-readable recording medium according to claim 1, wherein
the sending performed by the scheduling server includes sending job execution data indicative of a sequence of the job steps and an execution status of each job step to selected executing server,
the receiving performed by the executing server includes receiving job execution data from any one of the scheduling server and another executing server,
the executing performed by the executing server includes executing one non-executed job step in the sequence of job steps specified in received job execution data and updating an execution status of executed job step in the received job execution data, and
the selecting performed by the executing server includes selecting, when the job step executed at the executing is not the last job step, an executing server out of the executing servers to execute a next non-executed job step in the sequence of job steps specified in updated job execution data, and sending the updated job execution data to selected executing server.

3. The computer-readable recording medium according to claim 2, wherein the selecting performed by the executing server includes selecting any one of self and another executing server to execute the next non-executed job step in the sequence of job steps, and
upon selecting self, the executing performed by the executing server includes executing the next job step in the sequence of job steps specified in the updated job execution data and updating an execution status of executed job step in the updated job execution data, and
upon selecting another executing server, the selecting performed by the executing server includes sending the updated job execution data to the selected executing server.

4. The computer-readable recording medium according to claim 2, wherein the executing performed by the executing server includes allocating a value to a job step whose execution has been completed so as to make it possible to differentiate between executed and non-executed job steps in the batch job.

5. The computer-readable recording medium according to claim 1, wherein the computer program further causing the executing server to execute notifying, when the executing performed by the executing server includes executing the last job step, completion of execution of the batch job to the computer that received a request for execution of the batch job.

6. The computer-readable recording medium according to claim 1, wherein the selecting performed by the executing server includes selecting an executing server based on processing load on the executing servers.

7. The computer-readable recording medium according to claim 1, wherein the processing load includes Central Processing Unit (CPU) utilization, memory utilization, and Input/Output (IO) utilization.

8. A batch processing system that includes a plurality of executing servers and a scheduling server, and in which the scheduling server causes the executing servers to perform distributed execution of a batch job, the batch job including a plurality of job steps arranged in sequence from a first job step to a last job step, wherein
the scheduling server includes
a selecting unit that selects one executing server out of the executing servers to execute the first job step; and
a first information sending unit that sends job execution data indicative of a sequence of the job steps and an execution status of each job step to selected executing server, and
the executing server includes
a receiving unit that receives job execution data from any one of the scheduling server and another executing server;
an executing unit that executes one non-executed job step in the sequence of job steps specified in received job execution data and updates an execution status of executed job step in the received job execution data; and
a second information sending unit that selects, when the job step executed in the executing unit is not the last job step, an executing server out of the executing servers to execute a next non-executed job step in the sequence of job steps specified in updated job execution data, and sends the updated job execution data to selected executing server.

9. A method of performing distributed execution of a batch job on a system that includes a plurality of executing servers and a scheduling server, and in which the scheduling server causes the executing servers to perform distributed execution of a batch job, the batch job including a plurality of job steps arranged in sequence from a first job step to a last job step, comprising:
the scheduling server performing
selecting one executing server out of the executing servers to execute the first job step; and
sending data relating to the batch job to selected executing server, and
the executing server performing
receiving data from any one of the scheduling server and another executing server;
executing one non-executed job step in the batch job based on received data and updating execution status of executed job step in the received data; and
selecting, when the job step executed at the executing is not the last job step, an executing server out of all the executing servers including itself to execute a next non-executed job step in the batch job based on updated data, and if required sending the updated data to the selected executing server.

10. The method according to claim 9, wherein
the sending performed by the scheduling server includes sending job execution data indicative of a sequence of the job steps and an execution status of each job step to selected executing server,
the receiving performed by the executing server includes receiving job execution data from any one of the scheduling server and another executing server,
the executing performed by the executing server includes executing one non-executed job step in the sequence of job steps specified in received job execution data and updating an execution status of executed job step in the received job execution data, and
the selecting performed by the executing server includes selecting, when the job step executed at the executing is not the last job step, an executing server out of the executing servers to execute a next non-executed job step in the sequence of job steps specified in updated job execution data, and sending the updated job execution data to selected executing server.

11. A method according to claim 9 or 10, wherein the system includes a plurality of servers each of which acts as both an executing server and a scheduling server, such that all the servers are arranged to receive the batch job and to generate the job execution data, each server generates the job execution data pertaining to the received batch job, selects a server to execute the first job step, and transmits the job execution data along with a job execution request to the selected server.
